(19) Europäisches Patentamt
European Patent Office
Office européen des brevets

(11) EP 3 035 686 A1

(12) EUROPEAN PATENT APPLICATION

(43) Date of publication:
22.06.2016 Bulletin 2016/25

(51) Int Cl.:
H04N 19/147 (2014.01)  H04N 19/63 (2014.01)
H04N 19/103 (2014.01)  H04N 19/124 (2014.01)
H04N 19/126 (2014.01)  H04N 19/186 (2014.01)

(21) Application number: 14307057.1

(22) Date of filing: 16.12.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Thomson Licensing
92130 Issy-les-Moulineaux (FR)

(72) Inventors:
• Leleannec, Fabrice
35576 Cesson-Sévigné (FR)

• Lasserre, Sébastien
35576 Cesson-Sévigné (FR)
• Olivier, Yannick
35576 Cesson-Sévigné (FR)

(74) Representative: Huchet, Anne
Technicolor
1, rue Jeanne d'Arc
92443 Issy-les-Moulineaux Cedex (FR)

(54) **A device and a method for encoding an image and corresponding decoding method and decoding device**

(57) A method for encoding an image represented in a perceptual color space, wherein the image has at least a luminance component is disclosed. The method comprises:
- transforming (20) by a partial wavelet transform the luminance component to form at least one low frequency subband of wavelet coefficients and inverse transforming the at least one low frequency subband of wavelet coefficients to form a low frequency image;
- reconstructing (22) a low frequency component for at least one spatial area of the low frequency image;
- subtracting (24) the reconstructed low frequency component from the luminance component;
- transforming (26, 28) by a wavelet transform the luminance component to form at least one low frequency subband of wavelet coefficients, the threshold being proportional to the reconstructed low frequency component of the spatial area;
- quantizing (30) the wavelet coefficients of the spatial area responsive to the threshold ; and
- encoding (32) the quantized coefficients and the low frequency components.

FIGURE 2

**Description**

1. TECHNICAL FIELD

In the following, a method and a device for encoding an image represented in a perceptual color space are disclosed. Corresponding decoding method and decoding device are further disclosed.

2. BACKGROUND ART

Low-Dynamic-Range images (LDR images) are images whose luminance values are represented with a limited number of bits (most often 8 or 10). Such a representation does not render correctly small signal variations, in particular in dark and bright luminance ranges. In high-dynamic range images (HDR images), the signal representation is extended in order to maintain a high accuracy of the signal over its entire range. In HDR images, pixel values are usually represented in floating-point format (either 32-bit or 16-bit for each component, namely float or half-float).

The most popular high-dynamic-range file format is openEXR half-float format (16-bit per RGB component, i.e. 48 bits per pixel) or openEXR integer format with a long representation, typically at least 16 bits.

It is known for encoding a HDR image to reduce the dynamic range of the image in order to encode the image with a legacy encoder (initially configured to encode LDR images). In the document from Larson entitled "LogLuv encoding for full gamut, high dynamic range images" published in 1998 in Journal of Graphics Tools, the HDR images are represented in a LogLuv color space. The luminance and chrominance components are then processed by a JPEG2000 encoder in the same way as classical LDR images. Wavelet based encoders such as JPEG2000 encoders are widely used in the digital cinema industry. The LogLuv is a color space used for representing HDR images but is not well suited for compression.

3. BRIEF SUMMARY

A method for encoding an image represented in a perceptual color space, wherein the image has at least a luminance component is disclosed. The method comprises:

- transforming by a partial wavelet transform the luminance component to form at least one low frequency subband of wavelet coefficients and inverse transforming the at least one low frequency subband of wavelet coefficients to form a low frequency image;
- reconstructing a low frequency component for at least one spatial area of the low frequency image;
- subtracting the reconstructed low frequency component from the luminance component;
- transforming by a wavelet transform the luminance component to form at least one low frequency subband of wavelet coefficients, the threshold being proportional to the reconstructed low frequency component of the spatial area;
- quantizing the wavelet coefficients of the spatial area responsive to the threshold ; and
- encoding the quantized coefficients and the low frequency components.

This encoding method makes it possible to encode an HDR content with a wavelet based approach.

A coding device for encoding an image represented in a perceptual color space is disclosed, the image having at least a luminance component. The coding device comprises at least a processor configured to:

- transform by a partial wavelet transform the luminance component to form at least one low frequency subband of wavelet coefficients and inverse transforming the at least one low frequency subband of wavelet coefficients to form a low frequency image;
- reconstruct a low frequency component for at least one spatial area of the low frequency image;
- subtract the reconstructed low frequency component from the luminance component;
- transform by a wavelet transform the luminance component to form at least one low frequency subband of wavelet coefficients, the threshold being proportional to the reconstructed low frequency component of the spatial area;
- quantize the wavelet coefficients of the spatial area responsive to the threshold; and
- encode the quantized coefficients and the low frequency components.

A coding device for encoding an image represented in a perceptual color space, the image having at least a luminance component is disclosed. The coding device comprises :

- means for transforming by a partial wavelet transform the luminance component to form at least one low frequency subband of wavelet coefficients and inverse transforming the at least one low frequency subband of wavelet coefficients to form a low frequency image;

- means for reconstructing a low frequency component for at least one spatial area of the low frequency image;
- means for subtracting the reconstructed low frequency component from the luminance component;
- means for transforming by a wavelet transform the luminance component to form at least one low frequency subband of wavelet coefficients, the threshold being proportional to the reconstructed low frequency component of the spatial area;
- means for quantizing the wavelet coefficients of the spatial area responsive to the threshold ; and
- means for encoding the quantized coefficients and the low frequency components.

The following embodiments and variants apply to all the method for encoding and coding devices disclosed above.

Exemplarily, the spatial area comprises a single wavelet coefficient and reconstructing a low frequency component for the spatial area of the low frequency subband comprises quantizing and inverse quantizing the single wavelet coefficient.

In a variant, the spatial area comprises at least two wavelet coefficients and reconstructing a low frequency component for the spatial area of the low frequency subband comprises averaging the at least two wavelet coefficients into an averaged coefficient, quantizing and inverse quantizing the average coefficient.

In a first embodiment, quantizing the wavelet coefficients of the spatial area comprises:

- normalizing the wavelet coefficients using the threshold determined for the spatial area; and
- quantizing the normalized wavelet coefficients.

In a second embodiment, quantizing the wavelet coefficients in the spatial area comprises:

- determining a quantization step size for the spatial area from the threshold determined for the spatial area; and
- quantizing the wavelet coefficients using the determined quantization step size.

In a specific embodiment, the image has at least one chrominance component and the method further comprises:

- transforming by the wavelet transform the at least one chrominance component into chrominance wavelet coefficients; and
- normalizing the chrominance wavelet coefficients by the threshold of the spatial area to which the chrominance wavelet coefficients belong.

Advantageously, the perceptual color space is a CIELAB color space.

In a specific embodiment, the at least one low frequency subband of wavelet coefficients is divided into spatial areas and the encoding method applies on each spatial area.

A method for decoding an image having at least a luminance component represented in a perceptual color space is disclosed. The method comprises:

- decoding wavelet coefficients of at least a low frequency subband and a low frequency component for at least one spatial area of the low frequency subband;
- inverse quantizing the decoded wavelet coefficients of the spatial area responsive to a threshold, the threshold being proportional to the decoded low frequency component of the spatial area ;
- transforming by an inverse wavelet transform the wavelet coefficients to form a reconstructed luminance component.
- adding the decoded low frequency component to the luminance component.

A decoding device for decoding an image having at least a luminance component represented in a perceptual color space is disclosed. The decoding device comprises at least a processor configured to:

- decode wavelet coefficients of at least a low frequency subband and a low frequency component for at least one spatial area of the low frequency subband;
- inverse quantize the decoded wavelet coefficients of the spatial area responsive to a threshold, the threshold being proportional to the decoded low frequency component of the spatial area ;
- transform by an inverse wavelet transform the wavelet coefficients to form a reconstructed luminance component.
- add the decoded low frequency component to the luminance component.

A decoding device for decoding an image having at least a luminance component represented in a perceptual color space is disclosed. The decoding device comprises :

- means for decoding wavelet coefficients of at least a low frequency subband and a low frequency component for at least one spatial area of the low frequency subband;
- means for inverse quantizing the decoded wavelet coefficients of the spatial area responsive to a threshold, the threshold being proportional to the decoded low frequency component of the spatial area ;
- means for transforming by an inverse wavelet transform the wavelet coefficients to form a reconstructed luminance component.
- means for adding the decoded low frequency component to the luminance component.

The following embodiments and variants apply to all the method for decoding and decoding devices disclosed above.

In a first embodiment, inverse quantizing the wavelet coefficients of the spatial area comprises:

- inverse quantizing the wavelet coefficients; and
- de-normalizing the wavelet coefficients using the threshold of the spatial area.

In a second embodiment, inverse quantizing the wavelet coefficients of the spatial area comprises:

- determining a quantization step size for the spatial area from the threshold determined for the spatial area; and
- inverse quantizing the wavelet coefficients using the determined quantization step size.

In a specific embodiment, the image has at least one chrominance component and the method further comprises:

- decoding chrominance wavelet coefficients; and
- de-normalizing the chrominance wavelet coefficients by the threshold of the spatial area to which the chrominance wavelet coefficients belong.

In a specific embodiment, the at least one low frequency subband of wavelet coefficients being divided into spatial areas, the method applies on each spatial area.

Advantageously, the perceptual color space is a CIELAB color space.

A computer program product comprising program code instructions to execute the steps of the encoding method according to any of the embodiments and variants disclosed when this program is executed on a computer.

A computer program product comprising program code instructions to execute the steps of the decoding method according to any of the embodiments and variants disclosed when this program is executed on a computer.

A processor readable medium having stored therein instructions for causing a processor to perform at least the steps of the encoding method according to any of the embodiments and variants disclosed.

A processor readable medium having stored therein instructions for causing a processor to perform at least the steps of the decoding method according to any of the embodiments and variants disclosed.

4. BRIEF SUMMARY OF THE DRAWINGS

- Figure 1 represents an exemplary architecture of an encoding device configured to encode an image in a bitstream according to a specific and non-limitative embodiment;
- Figure 2 represents a flowchart of a method for encoding an image according to a specific and non-limitative embodiment;
- Figure 3 shows an image transformed by a partial wavelet transform with 3 levels of decomposition;
- Figure 4 shows a low frequency image divided into 16 spatial areas and an image decomposed into subbands;
- Figure 5 shows an image organized into subbands and the subbands into code-blocks;
- Figure 6 illustrates the encoding of low frequency components according to an exemplary embodiment;
- Figure 7 represents an exemplary architecture of a decoding device configured to decode an image from a bitstream according to an exemplary embodiment;
- Figure 8 represents a detail of the flowchart of the method for encoding an image depicted on figure 2; and
- Figure 9 represents a flowchart of a method for decoding an image from a bitstream according to an exemplary embodiment.

## 5. DETAILED DESCRIPTION

Perceptual color spaces are well-known in the color science field. CieLAB and CieLUV are examples of such perceptual color spaces. It will be appreciated, however, that the present principles not restricted to these specific perceptual color spaces.

A metric d((L,C1,C2), (L',C1',C2')) is usually associated with a perceptual color space. The metric $d((L, C1,C2), (L',C1',C2'))$ is defined such that there exists a threshold $\Delta E_0$ (also referred to as the JND, Just Noticeable Difference) below which a person is not able to perceive a visual difference between the two colors *(L, C1, C2)* and *(L',C1',C2')* of the perceptual color space, i.e. in the case where $d((L,C1,C2), (L',C1',C2')) < \Delta E_0$, one is not able to perceive a visual difference between *(L, C1,C2)* and *(L', C1',C2')*. This perceptual threshold is independent of the two colors *(L, C1, C2)* and *(L', C1',C2')* of the perceptual color space.

When an image comprises components belonging to a non-perceptual space such as (R,G,B) for example, the image is transformed in order to obtain a luminance component L and possibly two color components C1 and C2 which belong to a perceptual color space. The transform is defined as a function of the lighting environment used to visualize the image.

For example, assuming the initial color space is the (R,G,B) color space, the image is first transformed into the well-known linear space (X, Y, Z). An inverse gamma correction may possibly be applied before the transformation into the (X, Y, Z) space, if necessary.

In the case where the perceptual space is the LabCIE1976, the resulting image is transformed as follows:

$$L = 116 f(Y/Y_n) - 16$$

$$C1 = 500\big(f(X/X_n) - f(Y/Y_n)\big)$$

$$C2 = 200\big(f(Y/Y_n) - f(Z/Z_n)\big)$$

where f is a conversion function for example given by:

$$f(r) = r^{1/3} \quad if\ r > (6/29)^3$$

$$f(r) = \frac{1}{3} * \left(\frac{29}{6}\right)^2 * r + \frac{4}{29} \qquad otherwise$$

and where $(X_n, Y_n, Z_n)$ is a triplet representative of reference lighting conditions used to visualize the image.

The following metric may be defined on the perceptual space LabCIE1976:

$$d\big((L, C1, C2), (L', C1', C2')\big)^2 = (\Delta L)^2 + (\Delta C1)^2 + (\Delta C2)^2$$

where $\Delta L$ is the difference between the luminance components of two colors *(L, C1, C2)* and *(L',C1',C2')* and $\Delta C1$ (respectively $\Delta C2$) are the differences between the chrominance components of these two colors. In this space, a human eye is not able to perceive a visual difference between two colors as soon as $d((L,C1,C2), (L,C1',C2'))^2 < (\Delta E_0)^2$. The threshold $\Delta E_0$ is independent of the two colors *(L, C1, C2)* and *(L',C1',C2')* of the perceptual space.

The metric for the LabCIE94 perceptual space is defined as follows:

$$d((L, C1, C2), (L', C1', C2'))^2 :$$

$$= (\Delta L)^2 + (\Delta C / (1 + k_1 * C))^2 + (\Delta H / (1 + k_2 * C))^2$$

These quantities are given by the following equations:

$$C^2 = C1^2 + C2^2, \qquad h = atan\left(\frac{b}{a}\right) \; and \; H = C * h.$$

where C is the chroma, h is the hue and $k_1$ and $k_2$ are non-null constant values.

$$\Delta C = C - C' = \sqrt{C1^2 + C2^2} - \sqrt{(C1')^2 + (C2')^2}$$

A modified LabCIE94 may be defined for which the metric is identical to the metric of the LabCIE1976 color space. However, the definitions of L, C1 and C2 are different. They are thus denoted $\tilde{L}$, $\widetilde{C_1}$ and $\widetilde{C_2}$:

$$\tilde{L} = sign(Lr).\frac{116}{\beta}.ln\left(1 + \frac{|(Lr)|.\beta}{116}\right),$$ with $\beta \in [0,1]$ where *Lr* is the residual value of the luminance around a mean value, e.g 116: *Lr = L - 116*

If present, the chrominance components C1 and C2 are also transformed into the local perceptual color space as follows:

$$c = \left(C_1{}^2 + C_2{}^2\right)^{1/2}$$

$$\tilde{c} = \frac{ln(1+kc)}{k}, k \text{ is a constant (e.g. k= 0.5)}$$

$$\widetilde{C_1} = C_1.\frac{\tilde{c}}{c} \quad , \quad \widetilde{C_2} = C_2.\frac{\tilde{c}}{c}$$

The disclosure is not limited to the perceptual space LabCIE1976 but may be applied to other type of perceptual space such as the LabCIE1994, LabCIE2000, which are the same Lab space but with a different metric to measure the perceptual distance, or any other Euclidean perceptual space for instance. Other examples are LMS spaces and IPT spaces. A condition is that the metric shall be defined on these perceptual spaces in order that the metric is preferably proportional to the perception difference; as a consequence, a homogeneous maximal perceptual threshold $\Delta E_0$ exists below which a person is not able to perceive a visual difference between two colors of the perceptual space.

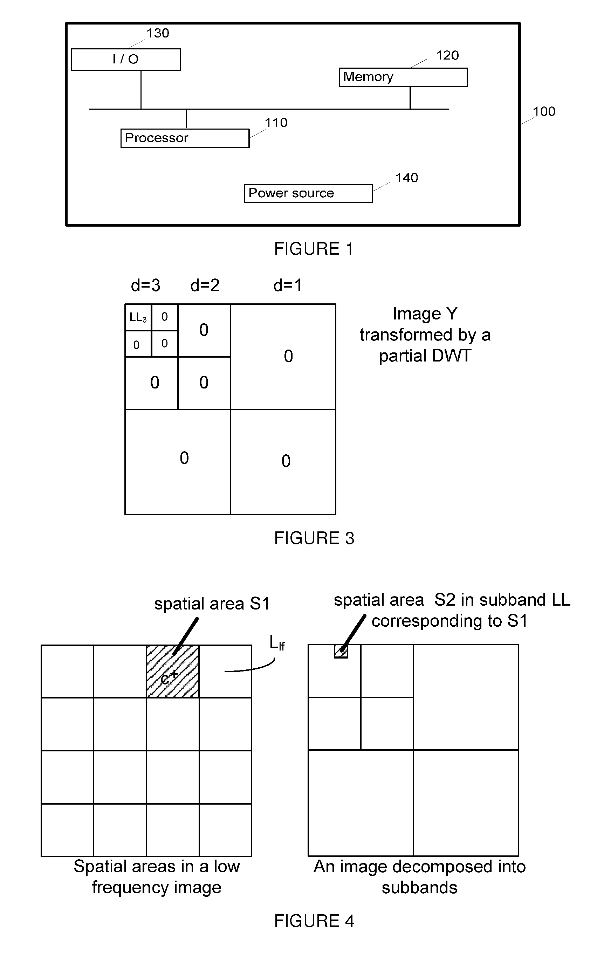

**Figure 1** represents an exemplary architecture of an encoding device 100 configured to encode, in a bitstream, an image Y represented in a perceptual color space and having at least one luminance component (L) according to a specific and non-limitative embodiment. The encoding device 100 comprises one or more processor(s) 110, which is(are), for example, a CPU, a GPU and/or a DSP (English acronym of Digital Signal Processor), along with internal memory 120 (e.g. RAM, ROM, EPROM). The encoding device 100 comprises one or several Input/Output interface(s) 130 adapted to display output information and/or allow a user to enter commands and/or data (e.g. a keyboard, a mouse, a touchpad, a webcam); and a power source 140 which may be external to the encoding device 100. The device 100 may also comprise network interface(s) (not shown). The image Y may be obtained from a source. According to different embodiments, the source can be but not limited to:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments, the bitstream may be sent to a destination. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

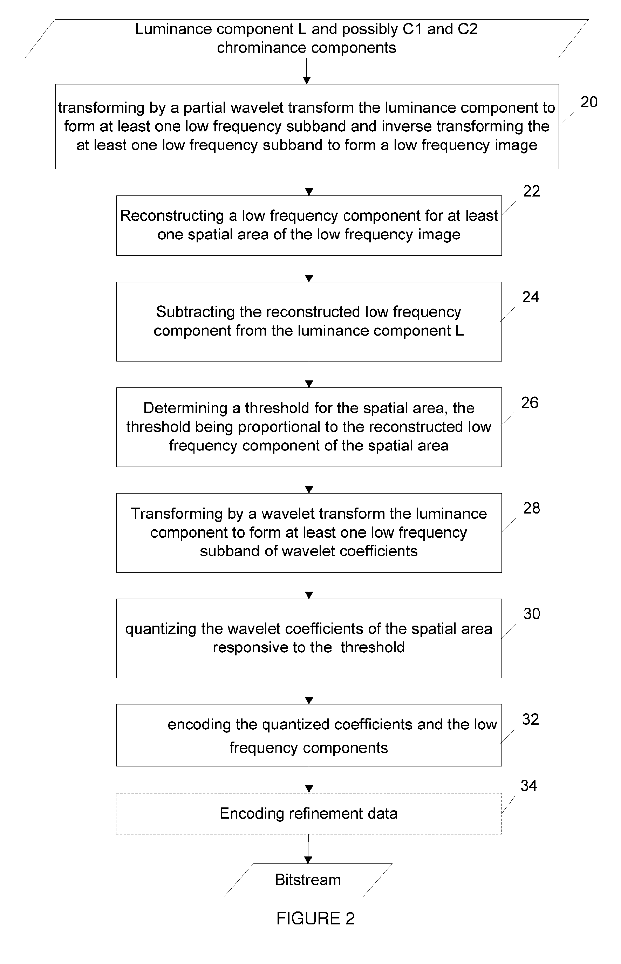

According to an exemplary and non-limitative embodiment, the encoding device 100 further comprises a computer program stored in the memory 120. The computer program comprises instructions which, when executed by the encoding device 100, in particular by the processor 110, make the encoding device 100 carry out the method described with reference to figure 2. According to a variant, the computer program is stored externally to the encoding device 100 on a non-transitory digital data support, e.g. on an external storage medium such as a HDD, CD-ROM, DVD, a read-only and/or DVD drive and/or a DVD Read/Write drive, all known in the art. The encoding device 100 thus comprises an interface to read the computer program. Further, the encoding device 100 could access one or more Universal Serial Bus (USB)-type storage devices (e.g., "memory sticks.") through corresponding USB ports (not shown).

According to exemplary and non-limitative embodiments, the encoding device 100 is a device, which can be but not limited to:

- a mobile device ;
- a communication device ;
- a game device ;
- a tablet (or tablet computer) ;
- a laptop ;
- a still image camera;
- a video camera ;
- an encoding chip;
- a still image server; and
- a video server (e.g. a broadcast server, a video-on-demand server or a web server).

**Figure 2** represents a flowchart of a method for encoding, in a bitstream, an image Y represented in a perceptual color space, i.e. the LAB76, the LAB94 color space, and having at least one luminance component (L) according to a specific and non-limitative embodiment.

In a step 20, the luminance component L of the image Y is transformed by a partial wavelet transform DWT, e.g. by a Discrete Wavelet Transform, to form at least one low frequency subband. **Figure 3** shows an image transformed by a wavelet transform with 3 levels of decomposition (d=1, 2 or 3). The transformed image is made of 10 subbands. On this figure, the low frequency subband is $LL_3$. The wavelet transform is said to be partial because the subband different from the low frequency subband are set to zero. The low frequency subband is then inverse transformed (DWT$^{-1}$) to form a low frequency image. The low frequency image is upsampled if necessary so that it has the same size as the image Y.

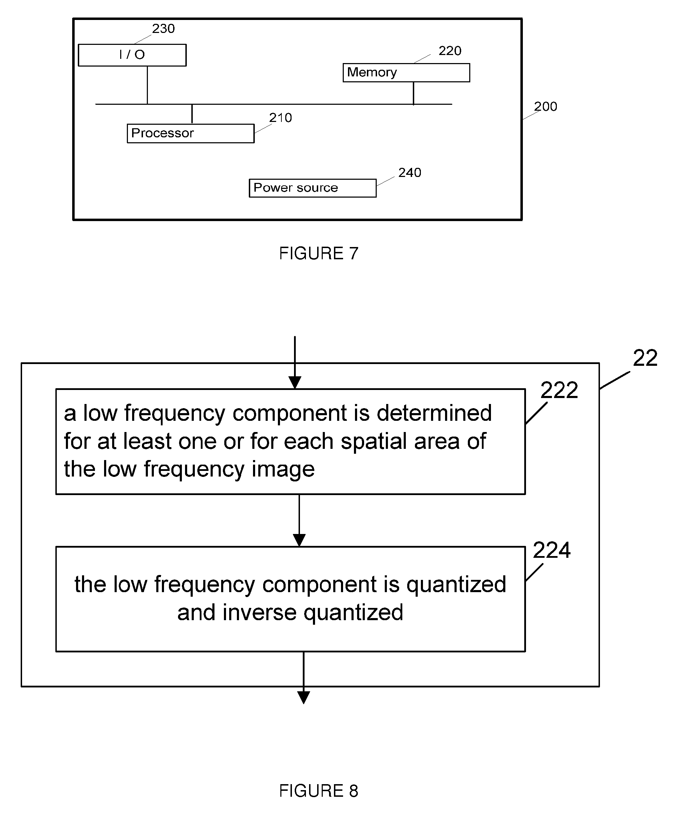

In a step 22, a low frequency component is reconstructed for at least one spatial area of the low frequency image. A spatial are may be a block comprising at least one pixel. In a variant, a low frequency component is reconstructed for each spatial area of the low frequency image. The step 22 is detailed on Figure 8.

In a sub-step 222, a low frequency component $L_{lf}$ is determined for the at least one spatial area of the low frequency image or for each spatial area. Figure 4 shows the low frequency image divided into 16 spatial areas. The low frequency component $L_{lf}$ for a given spatial area S1 may be equal to an average of the pixel values of this spatial area. In a variant, the low frequency component $L_{lf}$ can be one pixel value of the spatial area, e.g. the value of the center pixel (e.g. the pixel c represented by a cross in the spatial area S1).

In a sub-step 224, the low frequency component $L_{lf}$ is quantized and inverse quantized. The low frequency component $\hat{L}_{lf}$ obtained after quantization and inverse quantization is the reconstructed low frequency component: $\hat{L}_{lf}$=IQ(Q(L$_{lf}$)) where Q() and IQ() are the quantizing and inverse quantizing functions respectively. The quantized low frequency component $L_{lf}$ may be advantageously used in a further step 30 of the encoding method.

In a step 24, for at least one or for each spatial area of the low frequency subband, the reconstructed low frequency component $\hat{L}_{lf}$ is subtracted from the luminance component L. In the case of the LA76 perceptual color space, the luminance component after the subtraction is equal to $L-\hat{L}_{lf}$.

In the case of the modified LAB94 perceptual color space, the luminance component $\tilde{L}$ after the subtraction is defined as follows:

$$\tilde{L} = sign((Lr)) . \frac{116}{\beta} . ln\left(1 + \frac{|(Lr)| . \beta}{116}\right), \ \ with \ \ \beta \in [0,1]$$

with Lr= $L - \hat{L}_{lf}$.

It will be appreciated, however, that the present principles are not restricted to these equations that are specific to the modified LAB94 color space. Exemplarily, the present principles are applicable to the LAB76 color space.

In a step 26, a threshold $\Delta E^l$ is determined for the at least one spatial area. In a variant, a threshold $\Delta E^l$ is determined for each spatial area. The threshold is proportional to the reconstructed low frequency component of this spatial area, i.e. $\Delta E^l \alpha \hat{L}_{lf}$. Exemplarily, $\Delta E^l = \Delta E_o \cdot \left(\frac{Y_l}{Y_n}\right)^{1/3} = \frac{\Delta E_o * \hat{L}_{lf}}{116}$ where $\Delta E_0$ is dependent on the perceptual color space, and $Y_l$ is a linear-light luminance associated with the local environment of the considered spatial area. Therefore, the above equation represent the impact on the JND threshold obtained when changing the lighting environment from the nominal value $Y_n$ towards a local lighting environment represented by $Y_l$. In other words, when considering the Lab color transform equations, one gets the following relation:

$$\Delta E^l = \Delta E_o \cdot \frac{\hat{L}_{lf} + 16}{116}$$

If the linear part of the Lab color transform definition is ignored, one gets the following relation:

$$\Delta E^l = \Delta E_o \cdot \frac{\hat{L}_{lf}}{116}$$

In a step 28, the luminance component $L$ or $\tilde{L}$ obtained after step 24 is transformed by a wavelet transform to form at least one low frequency subband of wavelet coefficients $c_b(u,v)$, b identify the subband to which the coefficient belong and (u,v) are its coordinates in the frequency domain. If present, the chrominance components (e.g. $\widetilde{C_1}$ and $\widetilde{C_2}$ or C1 and C2) are also transformed by a wavelet transform into wavelet coefficients.

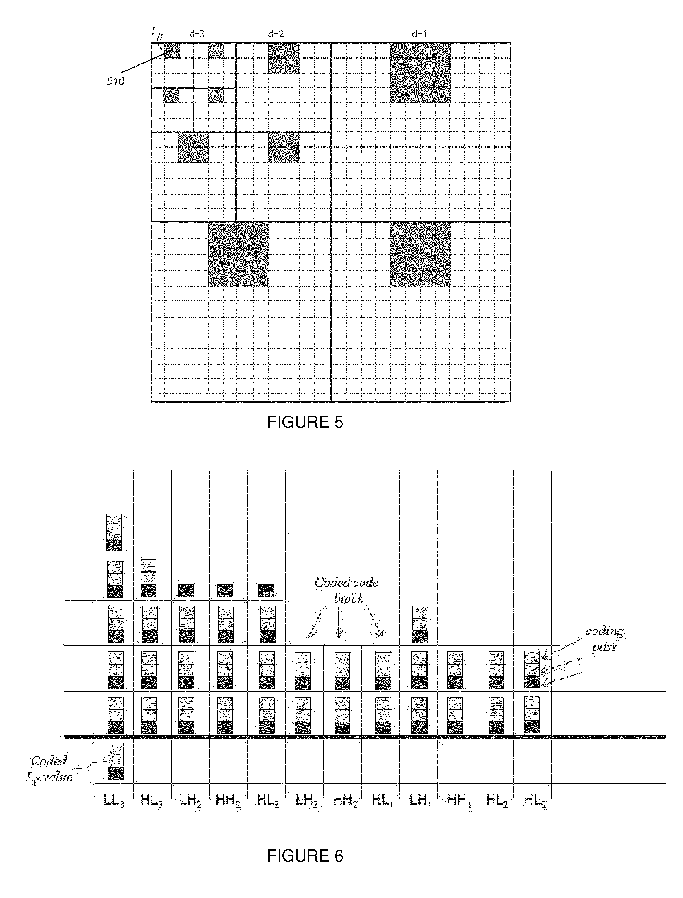

In a step 30, the wavelet coefficients $c_b(u,v)$ (obtained at step 28) of the at least one spatial area are quantized responsive to the threshold $\Delta E^l$ determined for this spatial area. In a variant, the wavelet coefficients $c_b(u,v)$ in each subband, i.e. the low frequency subband and the other subbands if any, and in each spatial areas are quantized responsive to the threshold $\Delta E^l$ of the spatial area of index I to which the wavelet coefficients belong. Figure 5 depicts a spatial area 510 in the subband LL3 and its corresponding areas in the other subbands(grey area). All the wavelet coefficients in the grey areas are quantized using the same threshold $\Delta E^l$. Each spatial area in the low frequency subband LL corresponds to a spatial area in the low frequency image. Exemplarily, on figure 4 the spatial area S2 in the low frequency subband LL correspond to the spatial area S1 in the low frequency image (spatial correspondence). The spatial area S2 has the same spatial position in the low frequency subband LL as the spatial area S1 in the low frequency image. In the following two different embodiments are disclosed.

In a first embodiment, the wavelet coefficients of the at least one spatial area are first normalized by the threshold $\Delta E^l$ and then quantized by a quantization step $\Delta_b$. In a variant, the wavelet coefficients in each spatial area and in each subband b are first normalized by the threshold $\Delta E^l$ and then quantized by a quantization step $\Delta_b$. $\Delta_b$ is a quantization step whose size is independent of the spatial area but is defined for the subband b. $\Delta_b$ takes a value that is signaled in the bitstream and determined during the encoding process. It may be manually set or tuned to target a compressed picture size. Exemplarily, $\Delta b$ is identical for all subbands b.

$$c_b^l(u,v) = c_b(u,v).\frac{1}{\Delta E^l}, \forall\, b$$

According to a specific and non-limiting embodiment, the low frequency component(s) $L_{lf}$ is(are) encoded directly inside a normative JPEG2000 bitstream. In this case, the first $B_{lf}$ most significant bit planes are allocated for the encoding of these $L_{lf}$ values. Consequently, the normalization of the wavelet coefficients takes the following form:

$$c_b^l(u,v) = c_b(u,v).\frac{1}{\Delta E^l}.2^{B_{lf}}, \forall \, b$$

In the case where the low frequency component(s) $L_{lf}$ is(are) encoded as metadata, the normalization is done without multiplying by $2^{B_{lf}}$. When present, the chrominance wavelet coefficients are normalized as follows $c_b^l(u,v) = c_b(u,v).\frac{1}{\Delta E^l}$ whatever the subband is, i.e. b=LL or b≠LL. The normalized wavelet coefficients may be thresholded by an upper bound value. This makes it possible to encode them by a JPEG2000 encoder on a limited number of bits.

In a second embodiment, a quantization step size $\Delta_b^l$ is defined locally for a spatial area of index I as follows:

$$\Delta_b^l = \Delta_b \times \Delta E^l$$

Then, the wavelet coefficients in at least one spatial area of index I of the low frequency subband LL are quantized by the locally defined quantization step size $\Delta_{LL}^l$. In a variant, the wavelet coefficients in each spatial area of index I and in each subband b are quantized by the locally defined quantization step size $\Delta_b^l$. This second embodiment is applicable in cases where a quantization step is dedicated to some JPEG2000 coding entities that are representative of a spatial area in the image. In practice, this typically corresponds to precincts. In JPEG2000, a precinct contains all the coded data that represents the image at a given resolution level, at a given rectangular spatial location in the image. Hence precincts are a mean of representing an image area in a given resolution level in the compressed domain. It is possible to associate one quantization step to each precinct. Thus, in the present embodiment, a quantization step size $\Delta_b^l$ is associated with each precinct within each resolution level. Each precinct thus corresponds to a spatial area with which a value $\hat{L}_{lf}$ is associated.

In a step 32, the quantized wavelet coefficients (luminance and possibly chrominance) and possibly the locally defined low frequency component(s) is(are) entropy coded in a bitstream. Indeed, encoding of the low frequency components $L_{lf}$ is possibly done during sub-step 224. Encoding the low frequency components $L_{lf}$ comprises quantizing $L_{lf}$ by Q(). In an advantageous variant, the quantized low frequency components are obtained directly from the sub-step 224 of step 22. In a specific and non-limiting embodiment, the quantized low frequency components $L_{lf}$ are encoded as metadata and the quantized wavelet coefficients are encoded by a JPEG2000 compliant encoder, specifically an EBCOT algorithm. EBCOT algorithm is a two-tiered architecture. Tier-1 is a context-based adaptive arithmetic coder, which is composed of a context formation (CF) engine and a binary arithmetic coder (BAC).Tier-2 is responsible for rate-distortion optimization and bitstream formation. In a variant, a JPEG2000 compliant encoder is used to encode both the quantized wavelet coefficients and the quantized low frequency components $L_{lf}$. More precisely, the quantized low frequency components $L_{lf}$ are encoded jointly with the code-blocks of the LL subband. The quantized low frequency components $L_{lf}$ occupy $B_{lf}$ first bit planes. They are thus encoded as MSB (MSB stands for Most Significant Bit) of the coefficients of the subband as illustrated by **figure 6.** The bit planes of the other coefficients are shifted. Exemplarily, JPEG2000 provides such a shifting technique for regions of interest coding. On the decoder side, this makes sure that the reconstructed low frequency component $\hat{L}_{lf}$ are available for decoding the image. The coding pass indicated on Figure 6 is a coding pass as defined by JPEG2000.

In an optional step 34, refinement data are encoded in the pixel domain in addition to the already coded image data. The goal of this additional encoding is to ensure that for each pixel of a given spatial area, the error introduced between the decoded pixel and its original value is lower than the Just Noticeable Difference threshold $\Delta E^l$ associated with the local spatial area. Therefore, this additional encoding comprises: reconstructing the L, C1 and C2 image components (or $L$, $\widetilde{C_1}$, $\widetilde{C_2}$) of each spatial area in the image, and encoding a pixel-domain residual for each component so as to respect a maximum allowed distortion level for each individual pixel in the spatial area, in the local perceptual space associated with that spatial area. In an exemplary embodiment, encoding the pixel-domain residual comprises quantizing the residual by a quantization step whose size is below a threshold value equal for example to twice the threshold $\Delta E^l$. The quantized residual are then entropy coded. In practice, such pixel-domain data coding may employ some known lossless coding techniques, like a trellis based coding technique for instance. The bitstream resulting from the encoding of refinement data can be multiplexed with the bitstream outputted in step 32.

**Figure 7** represents an exemplary architecture of the decoding device 200 configured to decode an image from a bitstream, wherein the image is represented in a perceptual color space and has at least one luminance component (L) according to an exemplary embodiment. The decoding device 200 comprises one or more processor(s) 210 , which is(are), for example, a CPU, a GPU and/or a DSP (English acronym of Digital Signal Processor), along with internal memory 220 (e.g. RAM, ROM, EPROM). The decoding device 200 comprises one or several Input/Output interface(s) 230 adapted to display output information and/or allow a user to enter commands and/or data (e.g. a keyboard, a mouse, a touchpad, a webcam); and a power source 240 which may be external to the decoding device 200. The device 200 may also comprise network interface(s) (not shown). The bitstream may be obtained from a source. According to different embodiments, the source the source can be but not limited to:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments, the decoded image may be sent to a destination. As an example, the decoded image is stored in a remote or in a local memory, e.g. a video memory or a RAM, a hard disk. In a variant, the decoded image is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

According to an exemplary and non-limitative embodiment, the decoding device 200 further comprises a computer program stored in the memory 220. The computer program comprises instructions which, when executed by the decoding device 200, in particular by the processor 210, make the decoding device 200 carry out the method described with reference to figure 8. According to a variant, the computer program is stored externally to the decoding device 200 on a non-transitory digital data support, e.g. on an external storage medium such as a HDD, CD-ROM, DVD, a read-only and/or DVD drive and/or a DVD Read/Write drive, all known in the art. The decoding device 200 thus comprises an interface to read the computer program. Further, the decoding device 200 could access one or more Universal Serial Bus (USB)-type storage devices (e.g., "memory sticks.") through corresponding USB ports (not shown).

According to exemplary and non-limitative embodiments, the decoding device 200 is a device, which can be but not limited to:

- a mobile device ;
- a communication device ;
- a game device ;
- a set top box;
- a TV set;
- a tablet (or tablet computer) ;
- a laptop ;
- a display and
- a decoding chip.

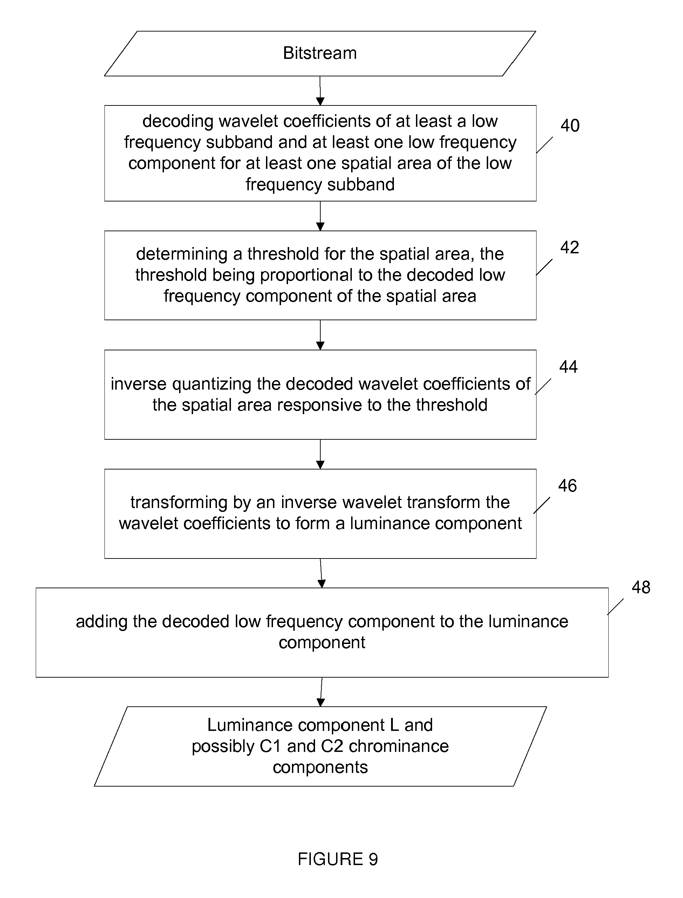

Figure 9 represents a flowchart of a method for decoding an image from a bitstream, wherein the image is represented in a perceptual color space and has at least one luminance component (L) according to an exemplary embodiment.

In a step 40, wavelet coefficients of at least one low frequency subband and at least one low frequency component $\hat{L}_{lf}$ for at least one spatial area of the low frequency subband are decoded. The decoded wavelet coefficients are organized into subbands, specifically into at least one low frequency subband. If present, wavelet coefficients are also decoded for the chrominance components. The at least one low frequency component $\hat{L}_{lf}$ is decoded for at least one spatial area of the low frequency subband. In a variant, a low frequency component $\hat{L}_{lf}$ is decoded for each spatial area. The decoded wavelet coefficients are the quantized wavelet coefficients encoded in step 32 of the encoding method.

In a step 42, a threshold is determined for the at least one spatial area of the low frequency subband. In a

variant, a threshold $\Delta E^l$ is determined for each spatial area of the low frequency subband. The threshold is proportional to the decoded low frequency component of this spatial area, i.e. $\Delta E^l \propto \hat{L}_{lf}$. Exemplarily,

$$\Delta E^l = \Delta E_o \cdot \left(\frac{Y_l}{Y_n}\right)^{1/3} = \frac{\Delta E_o * \hat{L}_{lf}}{116}$$ where $\Delta E_0$ is dependent on the perceptual color space, and $Y_l$ is the linear-light luminance associated with the local environment of the considered spatial area. Therefore, the above equation represents the impact on the JND threshold obtained when changing the lighting environment from the nominal value $Y_n$ towards a local lighting environment represented by $Y_l$. In other words, when considering the Lab color transform equations, one gets the following relation:

$$\Delta E^l = \Delta E_o \cdot \frac{\hat{L}_{lf} + 16}{116}$$

If the linear part of the Lab color transform definition is neglected, one gets the following relation:

$$\Delta E^l = \Delta E_o \cdot \frac{\hat{L}_{lf}}{116}$$

In a step 44, the wavelet coefficients decoded at step 40 are inverse quantized into wavelet coefficients responsive to the threshold $\Delta E^l$ of the spatial area of index I to which the wavelet coefficients belong. Figure 5 depicts a spatial area in the subband LL (grey area) and its corresponding area in the other subbands. All the wavelet coefficients in the grey area are inverse quantized using the same threshold $\Delta E^l$. In the following two different embodiments are disclosed.

In a first embodiment, the wavelet coefficients in each subband are first inverse quantized by a quantization step $\Delta_b$ and then de-normalized by the threshold $\Delta E^l$, $c_b\ (u, v) = c_b^l(u, v)^* \Delta E^l$ , where $\Delta_b$ is a quantization step whose size is independent of the spatial area but is defined for the subband b. $\Delta_b$ takes a value that is signaled in the bitstream and determined during the encoding process. It may be manually set or tuned to target a compressed picture size. Exemplarily, $\Delta b$ is identical for all subbands b. In a variant, the wavelet coefficients of each spatial area in each subband are first inverse quantized by a quantization step $\Delta_b$ and then de-normalized by the inverse of the threshold $\Delta E^l$.

According to a specific and non-limiting embodiment, the low frequency component(s) $\hat{L}_{lf}$ is(are) decoded from a normative JPEG2000 bitstream. In this case, the first $B_{lf}$ most significant bit planes are allocated for the decoding of these $\hat{L}_{lf}$ values. Consequently, the de-normalization of the wavelet coefficients takes the following form :

$$c_b\ (u, v) = c_b^l(u, v).\Delta E^l . \frac{1}{2^{B_{lf}}}$$

In the case where the low frequency component(s) $L_{lf}$ is(are) encoded from metadata, the de-normalization is done without dividing by $2^{B_{lf}}$. When present, the chrominance wavelet coefficients are de-normalized as follows

$$c_b\ (u, v) = c_b^l(u, v).\Delta E^l$$ whatever the subband is, i.e. b=LL or b≠LL.

In a second embodiment, a quantization step size $\Delta_b^l$ is defined locally for a spatial area of index I as follows:

$$\Delta_b^l = \Delta_b \times \Delta E^l$$

Then, the wavelet coefficients obtained at step 40 in at least one spatial area I of the low frequency subband LL are inverse quantized by the locally defined quantization step size $\Delta_{LL}^l$. In a variant, the wavelet coefficients in each subband b and each spatial area of index I are inverse quantized by the locally defined quantization step size $\Delta_b^l$. This second embodiment is applicable in cases where a quantization step is dedicated to some JPEG2000 coding entities that are representative of a spatial area in the image. In practice, this typically corresponds to precincts. In JPEG2000, a precinct contains all the coded data that represents the image at a given resolution level, at a given rectangular spatial location in the image. Hence precincts are a mean of representing an image area in a given resolution level in the compressed domain. It is possible to associate one quantization step to each precinct. Thus, in the present embodiment, a quantization step size $\Delta_b^l$ is associated with each precinct within each resolution level. Each precinct thus corresponds to a spatial area with which a value $\hat{L}_{lf}$ is associated.

In a step 46, the wavelet coefficients obtained after step 44 are transformed by an inverse wavelet transform into at least one luminance component (L or $\tilde{L}$) and possibly into chrominance components ($\widetilde{C_1}$ , $\widetilde{C_2}$ or C1 and C2) represented in a perceptual color space. In an optional step, refinement data, i.e. the one encoded in the optional step 32, are decoded in the pixel domain and added to the luminance and chrominance components.

In a step 48, the decoded low frequency component $\hat{L}_{lf}$ is added to the luminance component. In the case of the modified LAB94 perceptual color space, the decoded low frequency component $\hat{L}_{lf}$ is added to Lr which is obtained from $\tilde{L}$ Optionally, the components L, C1, C2 are then transformed in a non perceptual color space such as the RGB color space.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for encoding an image represented in a perceptual color space, wherein the image has at least a luminance component (L), the method comprising:

   - transforming (20) by a partial wavelet transform the luminance component (L) to form at least one low frequency subband of wavelet coefficients and inverse transforming the at least one low frequency subband of wavelet coefficients to form a low frequency image;
   - reconstructing (22) a low frequency component for at least one spatial area of the low frequency image;
   - subtracting (24) the reconstructed low frequency component from the luminance component;
   - transforming (26, 28) by a wavelet transform the luminance component to form at least one low frequency subband of wavelet coefficients, the threshold being proportional to the reconstructed low frequency component of the spatial area;
   - quantizing (30) the wavelet coefficients of the spatial area responsive to the threshold ; and
   - encoding (32) the quantized coefficients and the low frequency components.

2. The method of claim 1, wherein the spatial area comprises a single wavelet coefficient and wherein reconstructing a low frequency component for the spatial area of the low frequency subband comprises quantizing and inverse quantizing said single wavelet coefficient.

3. The method of any of claim 1 or 2, wherein the spatial area comprises at least two wavelet coefficients and wherein reconstructing a low frequency component for the spatial area of the low frequency subband comprises averaging said at least two wavelet coefficients into an averaged coefficient, quantizing and inverse quantizing said average coefficient.

4. The method according to any of claims 1 to 3, wherein quantizing the wavelet coefficients of the spatial area comprises:

   - normalizing the wavelet coefficients using the threshold determined for the spatial area; and
   - quantizing the normalized wavelet coefficients.

5. The method according to claim 3, wherein quantizing the wavelet coefficients in the spatial area comprises:

   - determining a quantization step size for the spatial area from the threshold determined for the spatial area; and
   - quantizing the wavelet coefficients using the determined quantization step size.

6. The method of according to any of claims 1 to 5, wherein the image has at least one chrominance component and wherein the method further comprises:

   - transforming by the wavelet transform the at least one chrominance component into chrominance wavelet coefficients; and
   - normalizing the chrominance wavelet coefficients by the threshold of the spatial area to which the chrominance wavelet coefficients belong.

7. The method according to any of claims 1 to 6, wherein the at least one low frequency subband of wavelet coefficients being divided into spatial areas, the method applies on each spatial area.

8. A coding device for encoding an image represented in a perceptual color space, the image having at least a luminance component, wherein the coding device comprises :

   - means for transforming by a partial wavelet transform the luminance component to form at least one low frequency subband of wavelet coefficients and inverse transforming the at least one low frequency subband of wavelet coefficients to form a low frequency image;

- means for reconstructing a low frequency component for at least one spatial area of the low frequency image;
- means for subtracting the reconstructed low frequency component from the luminance component;
- means for transforming by a wavelet transform the luminance component to form at least one low frequency subband of wavelet coefficients, the threshold being proportional to the reconstructed low frequency component of the spatial area;
- means for quantizing the wavelet coefficients of the spatial area responsive to the threshold ; and
- means for encoding the quantized coefficients and the low frequency components.

9. The coding device according to claim 8, wherein the device is configured to execute the steps of the method for encoding according to any of claims 1 to 7.

10. A method for decoding an image having at least a luminance component represented in a perceptual color space, the method comprising:

- decoding (40) wavelet coefficients of at least a low frequency subband and a low frequency component for at least one spatial area of the low frequency subband;
- inverse quantizing (42, 44) the decoded wavelet coefficients of the spatial area responsive to a threshold, the threshold being proportional to the decoded low frequency component of the spatial area ;
- transforming (46) by an inverse wavelet transform the wavelet coefficients to form a reconstructed luminance component.
- adding (48) the decoded low frequency component to the luminance component.

11. The method according to claim 10, wherein inverse quantizing the wavelet coefficients of the spatial area comprises:

- inverse quantizing the wavelet coefficients; and
- de-normalizing the wavelet coefficients using the threshold of the spatial area.

12. The method according to claim 10, wherein inverse quantizing the wavelet coefficients of the spatial area comprises:

- determining a quantization step size for the spatial area from the threshold determined for the spatial area; and
- inverse quantizing the wavelet coefficients using the determined quantization step size.

13. The method according to any of claims 10 to 12, wherein the image has at least one chrominance component and wherein the method further comprises:

- decoding chrominance wavelet coefficients; and
- de-normalizing the chrominance wavelet coefficients by the threshold of the spatial area to which the chrominance wavelet coefficients belong.

14. The method according to any of claims 10 to 13, wherein the at least one low frequency subband of wavelet coefficients being divided into spatial areas, the method applies on each spatial area.

15. A decoding device for decoding an image having at least a luminance component represented in a perceptual color space, wherein the decoding device comprises :

- means for decoding wavelet coefficients of at least a low frequency subband and a low frequency component for at least one spatial area of the low frequency subband;
- means for inverse quantizing the decoded wavelet coefficients of the spatial area responsive to a threshold, the threshold being proportional to the decoded low frequency component of the spatial area ;
- means for transforming by an inverse wavelet transform the wavelet coefficients to form a reconstructed luminance component.
- means for adding the decoded low frequency component to the luminance component.

16. A decoding device according to claim 15, wherein the device is configured to execute the steps of the decoding method according to any of claims 10 to 14.

FIGURE 1

d=3    d=2        d=1

Image Y
transformed by a
partial DWT

FIGURE 3

spatial area S1            spatial area S2 in subband LL
                            corresponding to S1

Spatial areas in a low        An image decomposed into
frequency image                    subbands

FIGURE 4

Luminance component L and possibly C1 and C2 chrominance components

transforming by a partial wavelet transform the luminance component to form at least one low frequency subband and inverse transforming the at least one low frequency subband to form a low frequency image | 20

Reconstructing a low frequency component for at least one spatial area of the low frequency image | 22

Subtracting the reconstructed low frequency component from the luminance component L | 24

Determining a threshold for the spatial area, the threshold being proportional to the reconstructed low frequency component of the spatial area | 26

Transforming by a wavelet transform the luminance component to form at least one low frequency subband of wavelet coefficients | 28

quantizing the wavelet coefficients of the spatial area responsive to the threshold | 30

encoding the quantized coefficients and the low frequency components | 32

Encoding refinement data | 34

Bitstream

FIGURE 2

FIGURE 5

FIGURE 6

FIGURE 7

a low frequency component is determined for at least one or for each spatial area of the low frequency image

222

the low frequency component is quantized and inverse quantized

224

22

FIGURE 8

```
           ┌─────────────────────────────────┐
           │           Bitstream              ╱
           └─────────────────────────────────┘
                          │
                          ▼
     ┌──────────────────────────────────────────┐
     │  decoding wavelet coefficients of at least a low    │        40
     │  frequency subband and at least one low frequency   ╱
     │  component for at least one spatial area of the low │
     │           frequency subband               │
     └──────────────────────────────────────────┘
                          │
                          ▼
     ┌──────────────────────────────────────────┐
     │  determining a threshold for the spatial area, the  │       42
     │  threshold being proportional to the decoded low    ╱
     │    frequency component of the spatial area          │
     └──────────────────────────────────────────┘
                          │
                          ▼
     ┌──────────────────────────────────────────┐          44
     │  inverse quantizing the decoded wavelet coefficients of ╱
     │    the spatial area responsive to the threshold     │
     └──────────────────────────────────────────┘
                          │
                          ▼
     ┌──────────────────────────────────────────┐          46
     │  transforming by an inverse wavelet transform the   ╱
     │  wavelet coefficients to form a luminance component │
     └──────────────────────────────────────────┘
                          │
                          ▼
 ┌────────────────────────────────────────────────────┐        48
 │ adding the decoded low frequency component to the luminance ╱
 │                    component                        │
 └────────────────────────────────────────────────────┘
                          │
                          ▼
           ┌─────────────────────────────────┐
          ╱        Luminance component L and          ╱
         ╱      possibly C1 and C2 chrominance        ╱
        ╱                 components                  ╱
         └─────────────────────────────────┘
```

FIGURE 9

Europäisches
Patentamt

European
Patent Office

Office européen
des brevets

# EUROPEAN SEARCH REPORT

Application Number

EP 14 30 7057

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MANTIUK R ET AL: "Backward compatible high dynamic range MPEG video compression", ACM TRANSACTIONS ON GRAPHICS (TOG), ACM, US, 30 July 2006 (2006-07-30), pages 713-723, XP007902456, ISSN: 0730-0301, DOI: 10.1145/1141911.1141946 * figures 2-7 * * paragraph [0003] * * paragraph [03.1] - paragraph [03.3] * | 1-16 | INV. H04N19/147 H04N19/63 H04N19/103 H04N19/124 H04N19/126 H04N19/186 |
| Y | David Touzé ET AL: "HDR Video Coding based on Local LDR Quantization", HDRi2014 -Second International Conference and SME Workshop on HDR imaging, 4 March 2014 (2014-03-04), XP055112158, Retrieved from the Internet: URL:http://people.irisa.fr/Ronan.Boitard/articles/2014/HDR Video Coding based on Local LDR Quantization.pdf [retrieved on 2014-04-04] * paragraph [0003] * * figures 1,2 * | 1-16 | |
| Y | LASSERRE S ET AL: "High Dynamic Range video coding", 16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-P0159-v3, 15 January 2014 (2014-01-15), XP030115678, * figures 1,2 * * paragraph [02.1] * | 1-16 | TECHNICAL FIELDS SEARCHED (IPC) H04N |

-/--

The present search report has been drawn up for all claims

| Place of search | Date of completion of the search | Examiner |
|---|---|---|
| Munich | 15 April 2015 | Kuhn, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 30 7057

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LE LÃ CR ANNEC F ET AL: "Usage of modulation channel for high bit-depth signal encoding", 18. JCT-VC MEETING; 30-6-2014 - 9-7-2014; SAPPORO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-R0267, 26 June 2014 (2014-06-26) , XP030116574, * paragraph [Annex5] * | 1-16 | |
| A | JP 2011 004345 A (JAPAN BROADCASTING CORP) 6 January 2011 (2011-01-06) * paragraph [0011] - paragraph [0015] * * paragraph [0057] - paragraph [0058] * * figure 11 * | 1-16 | |
| A | CN 102 186 069 A (HUI WANG; ZEXUN GENG WANG HUI; GENG ZEXUN) 14 September 2011 (2011-09-14) * the whole document * | 1-16 | **TECHNICAL FIELDS SEARCHED** (IPC) |
| A,D | LARSON G W: "LogLuv encoding for full-gamut, high-dynamic range images", JOURNAL OF GRAPHICS TOOLS, ASSOCIATION FOR COMPUTING MACHINERY, NEW YORK, US, vol. 3, no. 1, 22 January 1999 (1999-01-22), pages 15-31, XP009133824, ISSN: 1086-7651 * paragraph [0004] - paragraph [0005] * | 1-16 | |

The present search report has been drawn up for all claims

| Place of search | Date of completion of the search | Examiner |
|---|---|---|
| Munich | 15 April 2015 | Kuhn, Peter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                           
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 30 7057

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2015

| Patent document cited in search report | | Publication date | Patent family member(s) | | Publication date |
|---|---|---|---|---|---|
| JP 2011004345 | A | 06-01-2011 | JP 5140638 B2 | | 06-02-2013 |
| | | | JP 2011004345 A | | 06-01-2011 |
| CN 102186069 | A | 14-09-2011 | NONE | | |

EPO FORM P0459

For more details about this annex : see Official Journal of the European Patent Office, No. 12/82

**EP 3 035 686 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LARSON.** LogLuv encoding for full gamut, high dynamic range images. *Journal of Graphics Tools,* 1998